# EUROPEAN PATENT APPLICATION

(11) **EP 4 742 654 A1**
(43) Date of publication of application: **13.05.2026**
(21) Application number: 25205507.4
(22) Date of filing: 30.09.2025
(51) Int. Cl.: H04N 13/344, H04N 19/167, H04N 19/17, H04N 25/46

(54) **ADAPTIVE FOVEATED IMAGE SENSORS FOR NEAR-EYE DEVICES**

(30) Priority: 07.11.2024 US 202418940740
(71) Applicant: Lemon Inc., Grand Cayman, KY1-1205 (KY)
(72) Inventor: LIU, Sheng, California, 90066 (US); MENG, Xiaozhou, California, 90066 (US); LI, Yongjun, California, 90066 (US)
(74) Representative: Isarpatent

(57) **Abstract**

Implementations for adaptive foveated image sensors are provided. One implementation includes an image sensor system for adaptive foveated processing, the image sensor system comprising: an image sensor (102) for generating (902)a set of signals by imaging an environment; and processing circuitry (104) configured to: receive (904) foveated region of interest (ROI) information and ambient light information; determine (906) a processing mode based on the ambient light information; compress (908) the set of signals from the image sensor based on the determined processing mode and the foveated ROI information to generate a compressed set of pixels; and output (912) the compressed set of pixels.

## Description

### BACKGROUND

Near-eye devices are display devices, such as head-mounted displays, used in various augmented reality/mixed reality/virtual reality (AR/MR/VR) applications. These wearable devices utilize image generators and imaging optics for providing image content to the user's eyes. Different configurations of sensors and instruments enable various functionalities. For AR/MR applications, computer-generated content can be imposed onto the user's eyes, combining it with a real-world view through a transparent display. In VR applications, the device immerses the user in a virtual environment by projecting image content across the user's entire field-of-view, or a significant portion thereof. In some applications, the VR image content is computer generated and virtual. In video pass-through applications, a video feed of the user's surroundings is captured by mounted cameras and displayed to the user. Computer-generated content, either interactive or non-interactive, can also be overlaid on the video feed.

### SUMMARY

Implementations for adaptive foveated image sensors are provided. One implementation includes an image sensor system for adaptive foveated processing, the image sensor system comprising: an image sensor for generating a set of signals by imaging an environment; and processing circuitry configured to: receive foveated region of interest (ROI) information and ambient light information; determine a processing mode based on the ambient light information; compress the set of signals from the image sensor based on the determined processing mode and the foveated ROI information to generate a compressed set of pixels; and output the compressed set of pixels.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 shows a schematic view of an example near-eye device implementing an example adaptive foveated image sensor.
FIG. 2 shows an example flow diagram for implementing different processing modes, which can be performed using the example near-eye device of FIG. 1.
FIGS. 3A and 3B show example subsampling processes, which can be performed using the example near-eye device of FIG. 1.
FIG. 4 shows an example binning process, which can be performed using the example near-eye device of FIG. 1.
FIG. 5 shows an example mixed analog-digital sampling process for generating a foveation map, which can be performed using the example near-eye device of FIG. 1.
FIG. 6 shows an example image with a foveation map applied, which can be performed using the example near-eye device of FIG. 1.
FIG. 7 shows how an example foveation map is divided into three different virtual channels, which can be performed using the example near-eye device of FIG. 1.
FIGS. 8A-8C show example processes for adding dummy data for different virtual channels, which can be performed using the example near-eye device of FIG. 1.
FIG. 9 shows a flow diagram for an example method of adaptive foveated processing, which can be performed using the example near-eye device of FIG. 1.
FIG. 10 shows a schematic view of an example computing system including the near-eye device of in FIG. 1.
FIG. 11 shows an example form factor of the near-eye device of FIG. 1, in the form of AR/VR glasses.

### DETAILED DESCRIPTION

Near-eye wearable devices implementing AR/MR/VR applications can provide image content to a user through different approaches for various applications, including consumer and industrial applications. With more advanced designs and added functionalities, the development of near-eye devices involves significant challenges in providing adequate computational power and power economy in limited form factors. For example, it can be desirable for near-eye devices to provide high-resolution image content, such as high-resolution computer-generated content, a high-resolution video feed of the user's environment, etc. In addition to processing and rendering high-resolution content, other functionalities such as eye-tracking technology can also put a demand on computational power. These needs often result in increased requirements of battery capacity, computational power, and thermal management, which can lead to bulkier designs with larger, heavier batteries.

Current near-eye wearable devices face tradeoffs of achieving high image resolution, broad fields-of-view (FoV), low power consumption, and adequate computational processing power. One contemplated solution involves the intricacies of human perception. A typical human FoV is around 180 degrees. However, only a small portion of a person's vision is focused on at a given time. This area can be referred to as a foveated region. Generally, details outside this region, especially in the periphery, are ignored. Mimicking this behavior offers possible advantages in the operation of near-eye devices and can enable high resolution in the foveated region, a wide FoV, adaptability, high dynamic range, low latency, and superior efficiency. Some wearable devices attempt to emulate this behavior through various foveated rendering algorithms. Generally, these algorithms involve determining a user's gaze location (e.g., using eye-tracking cameras and eye-tracking algorithms) and using such information to render image content with multiple regions having different resolutions. For example, a region rendered at the gaze location (foveated region) is typically rendered with the highest-resolution. Concentric or surrounding regions around this foveated region are rendered with decreasing resolutions. These techniques may lower rendering requirements. However, there is still a desire for further computational efficiency and power economy.

In view of the observations above, implementations of adaptive foveated image sensors are provided. Adaptive foveated image sensors can be implemented to generate image content with multiple regions of interest (ROIs) with different resolutions based on one or more predetermined criteria. Example criteria include predetermined thresholds involving ambient light information and/or foveated ROI information. Adaptive foveated image sensors can reduce data transfer rate, enabling higher resolution, higher frame rates, larger FoV, higher dynamic range, lower power consumption, and/or lower latency compared to traditional systems. Such innovations have broad applications, including artificial intelligence (AI) assistant devices and AR/MR/VR applications for near-eye wearable devices such as video see-through systems. Adaptive foveated image sensors can be configured to adapt to changing conditions. For example, adapting to changes in ambient light enables implementations with high resolution in relatively bright conditions and high signal-to-noise ratio (SNR) in relatively low light conditions.

In previous rendering techniques and algorithms, the foveated rendering of image content generally involves the processing of full-resolution image content, such as computer-generated content and image content received from onboard cameras and their image sensors. In contrast, the techniques described herein include methods and processes of performing adaptive foveation performed on the image sensor. For example, the processing of captured image signals to generate image content with foveated regions, or foveated content, can be performed in hardware on the image sensor. The foveated content can be output, through a mobile industry processor interface (MIPI) for example, to other components of the near-eye device for further processing, rendering, and display. Output of image data that has already been "foveated" enables lower data transfer rates compared to traditional devices, allowing for improvements in other computational aspects (such as enabling higher frame rates).

Adaptive foveated image sensors can be implemented to perform adaptive foveation on captured image signals based on foveated region-of-interest (ROI) information and/or ambient light information. Depending on the information received, the image sensors can be configured to generate foveated image data with ROIs of different resolutions based on one or more predefined processing modes. For example, foveated ROI information indicating a foveated region, such as an area of focus (user's gaze) or an area with high spatial frequency (indicating sharper lines and objects), can result in operation of the image sensor in a foveated ROI mode where the processed image data includes full-resolution data at the foveated region and lower resolution image data in other regions. The original image data in the areas outside the foveated ROI can be compressed using various techniques to provide the lower resolution image data. In some implementations, adaptive foveation can be performed to generate foveated image data on a per-frame basis. Different processing modes can be implemented for different frames depending on the foveated ROI information and/or ambient light information. For example, changes to foveated ROI information (e.g., detection of high spatial frequency content) and/or ambient light information (e.g., transitions between bright and dim conditions) can result in a different processing mode and/or change to a foveated ROI across different frames.

In addition to a foveated ROI mode, other processing modes can also be implemented. For example, a low-resolution mode can be implemented upon detection of a low light environment from the ambient light information. In a low light environment, image resolution can have a lower priority. Instead, noise is more perceptible. Also, image data without high spatial frequency components (e.g., solid color walls) would likely fail to take advantage of high resolution. In these cases, the image sensor can advantageously compress the entire original image data. The compressed image data can result in a higher SNR.

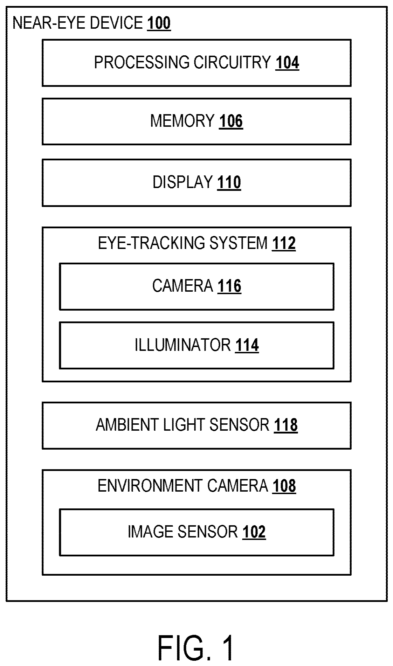

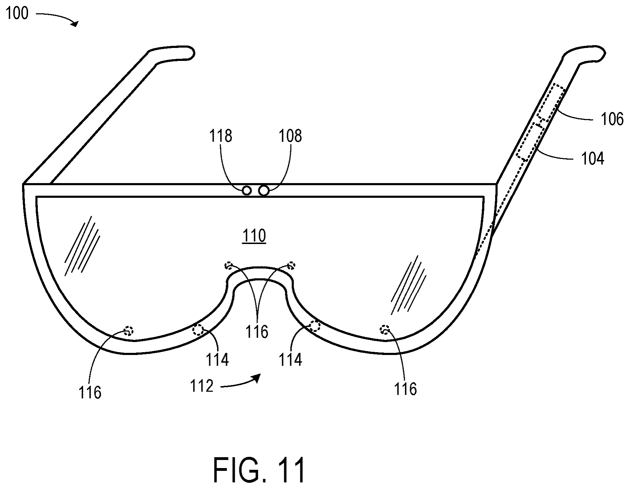

Turning now to the drawings, adaptive foveated image sensors and related implementations are described in further detail. FIG. 1 shows a schematic view of an example near-eye device 100 implementing an adaptive foveated image sensor 102. Various types of near-eye devices can be implemented. For example, smartglasses, monocular displays, and other head-mounted displays for AR, MR, or VR applications can be utilized. One example form factor for the near-eye device schematically illustrated in FIG. 1 is shown in FIG. 11, discussed below. Continuing with FIG. 1, the example near-eye device 100 includes processing circuitry 104 and memory 106 for performing various tasks, including computations and software-related tasks described herein. For example, the processing circuitry 104 can be utilized to collect data, determine processing mode, and/or determine foveated ROI information. In some implementations, the processing circuitry 104 includes graphical processing power capable of rendering images for display. For example, the processing circuitry 104 can include a graphical processing unit (GPU).

Adaptive foveated image sensors can be implemented for various applications. One example application includes video pass-through, where a video feed captured by the environment camera 108 is displayed to the user. Various types of image sensors can be implemented. For example, the image sensor 102 can include a charged-coupled device (CCD) sensor, a complementary metal-oxide-semiconductor (CMOS) sensor, or any other imaging sensors. Any number of image sensors can be implemented. In the depicted example, the image sensor 102 is implemented in an environment camera 108 of the near-eye device 100. In some implementations, the near-eye device 100 includes multiple cameras and multiple image sensors.

The image sensor 102 can be configured to perform adaptive foveation in various ways. In some implementations, the image sensor 102 is configured to capture image signals and to process said signals using on-board hardware (e.g., using an application-specific integrated circuit (ASIC) layer). The image signals can be processed in various ways depending on the application. Foveated ROI information and/or ambient light information can be used to logically determine one of a plurality of predefined processing modes with which to process the signals. In some implementations, the processing circuitry 104 collects data and determines foveated ROI information and/or processing mode. Foveated ROI information and/or processing mode information can be forwarded to an image signal processor (ISP) that can convert such information into register settings for the image sensor 102. From the register settings, the image sensor 102 can perform the desired foveation through hardware logic. Generally, the signals are processed into foveated image data formatted as a compressed set of pixels. In some processing modes, the compressed set of pixels includes a foveated region with full-resolution (uncompressed) and other regions with lower resolution image data. The compressed set of pixels can be outputted (e.g., using a MIPI) as digital pixel information for further process and rendering. The rendered image data can then be displayed on a display 110 of the near-eye device 100.

The processing mode to be implemented can be determined in various ways. In some implementations, the processing mode is determined by ambient light information and/or foveated ROI information. Foveated ROI information can be implemented and utilized in various ways. Foveated ROI information can include any type of data capable of defining/deriving one or more ROIs. In some implementations, the foveated ROI information includes coordinates, or information for deriving such coordinates, of one or more ROIs. These ROI(s) indicate areas designated for application of different processing/compression techniques by the image sensor 102. For example, the foveated ROI information can include coordinates for a foveated region. The image sensor 102 can be configured to generate full-resolution image data for the foveated ROI and to generate lower resolution (compressed) image data in other regions.

ROI coordinates can be determined using various techniques, including but not limited to gaze detection, voice command, gesture command, and/or computer vision techniques (facial recognition, text recognition, object recognition, etc.). In some implementations, software computing ROI coordinates (using a technique described above for example) can be used to provide such coordinates to the image sensor 102. In the depicted example, the near-eye device 100 includes an eye-tracking system 112 capable of gaze detection and/or providing convergence data. The eye-tracking system 112 includes an illuminator 114 or light source for illuminating the user's eye(s) and a camera 116 for imaging the user's eye(s). In some implementations, the eye-tracking system 112 includes multiple illuminators and multiple cameras. Various gaze detection methodologies can be utilized. For example, near-infrared imaging can be used to track various features of the eyes to determine gaze information. In some implementations, machine learning models are utilized in combination with camera-captured images to determine gaze information.

Ambient light information can be implemented and utilized in various ways to determine a processing mode. For example, in a low light environment, the processing mode can be determined to be a low-resolution mode. In the depicted example, the near-eye device 100 includes an ambient light sensor (ALS) 118 capable of providing environmental illuminance data. In such cases, the ambient light information can include a luminance (lux) value indicating a brightness level of the environment. In some implementations, the ambient light information is derived from the brightness of the display 110 of the near-eye device 100. In such cases, the ambient light information can include a nit value.

In addition to the components illustrated in FIG. 1, other components providing various functionalities can also be implemented. For example, the near-eye device 100 can include inertial measurement units, accelerometers, gyroscopes, magnetometers, and/or simultaneous localization and mapping (SLAM) cameras, which can be used to predict head and eye movement to help decide foveated ROI information. For example, the image sensor 102 can be configured to provide foveated image data based on predicted future foveated ROIs. In some implementations, the near-eye device 100 includes a microphone for collecting audio data. Such implementations enable the system to collect the user intention through voice indication to provide foveated ROI information. In further implementations, the audio data is translated to text and used in combination with machine learning models to generate ROI coordinates from image data. For example, the user may issue a voice command to focus on a given object. Machine learning models may be fed image data along with the voice command as a prompt to predict a foveated ROI that includes the given object.

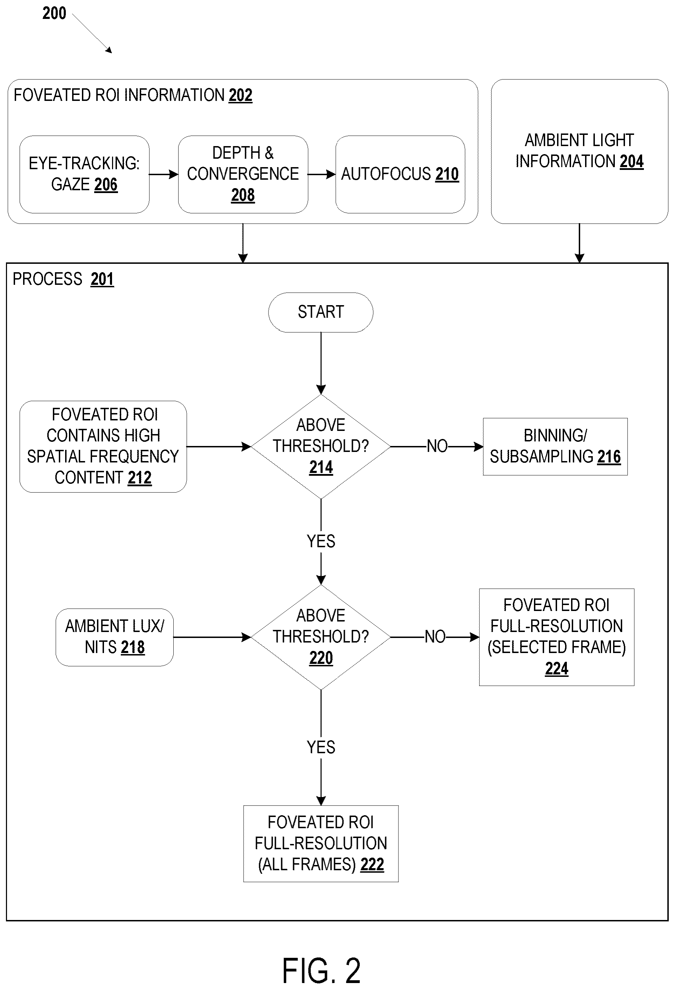

FIG. 2 shows an example flow diagram 200 for implementing different processing modes. The example process 201 starts with receiving foveated ROI information 202 and ambient light information 204. Foveated ROI information 202 and ambient light information 204 can include various types of data, which can be used for determining processing modes. In some implementations, the foveated ROI information 202 includes ROI coordinates, which can be derived in various ways. In the depicted example, the foveated ROI information 202 is provided by an eye-tracking system. The eye-tracking system provides gaze detection 206. From the gaze location, depth and convergence 208 can then be calculated, and an autofocus system 210 can be applied to determine foveated ROI information.

A processing mode to be applied can be determined based on the ambient light information 204 and/or the foveated ROI information 202. The process 201 includes determining whether the foveated ROI described in the foveated ROI information 202 contains high spatial frequency content 212 above a predetermined threshold 214. If there is insufficient high spatial frequency content 212, then a binning/subsampling process 216 is performed on the image data. The binning/subsampling process 216 can be performed in various ways. For example, an analog binning, digital binning, analog subsampling, or digital subsampling can be performed on the entire image data. Other compression techniques may also be implemented.

The binning/subsampling process 216 can be performed in hardware, configurable by sensor register settings. In some implementations, the binning/subsampling process 216 is performed with an analog circuit on the image sensor. This can reduce the bandwidth associated with analog-digital-conversion (ADC) and on-chip processing. Depending on the layout, some compression methods may be more suitable than others. For example, with a 2x2 RGGB pixel layout pattern (also known as a quad Bayer pattern), 2x2 binning (4:1 ratio) can be performed. Other ratios can also be performed. Subsampling can be performed at a variety of different ratios, including 2:1, 4:1, and 16:1. In some implementations, the subsampling process is configured to uniformly sample pixels to form a Bayer pattern.

Referring back to the process 201 of FIG. 2, if there is sufficient high spatial frequency content detected in the foveated ROI, then the process 201 proceeds to the next inquiry. The process 201 includes determining whether the ambient lux/nit value 218 is above a predetermined threshold 220. Brightness levels can affect the difficulty for a user to be able to discern certain features in an image. Generally, a user would benefit from higher resolutions in a brighter environment. If the ambient lux/nit value 218 from the ambient light information 204 is above the predetermined threshold 220, then a foveated ROI full-resolution mode is performed for all frames 222.

A foveated ROI processing mode can be implemented in various ways. In some implementations, a foveation map is applied to captured image data. A foveation map describes different ROIs to be processed differently. Generally, high- or full-resolution is realized in the foveated ROI provided by the foveated ROI information 202. In the remaining areas (non-foveated ROI), binning, subsampling, or other compression methods can be performed to achieve a lower resolution. With subsampling, dynamic range and SNR can be similar to the full-resolution foveated ROI, which could facilitate post processing. Binning/subsampling processes can be performed in the analog domain, the digital domain, or a mixing of both analog and digital.

If the ambient lux/nit value 218 is below the predetermined threshold 220, then a foveated ROI full-resolution mode is performed on a per-frame basis, applying the current settings for the current selected frame 224. Multi-frame processing for foveated image sensors can be performed in various ways. In some implementations, foveation maps are applied dynamically to each frame. Different compression techniques can be applied to different frames. For example, full analog binning (or subsampling) can be performed on a first frame, and the foveated ROI full-resolution process described above can be applied to a second frame. The two frames can be read out at a same frame rate. The foveated ROI can be readout at full resolution without binning or subsampling. Remosaic can be performed on the image sensor or ISP. The frame timing output from the sensor can be alternated and combined in the ISP, resulting in an effective frame rate of 50% of the full sensor frame rate. Various other combinations can also be implemented.

FIG. 2 illustrates an algorithm for determining processing modes based on foveated ROI information 202 and ambient light information 204. Other algorithms and logic trees can also be implemented. For example, ambient light information 204 can be used to solely determine the processing mode. Similarly, foveated ROI information 202 can be used to solely determine the processing mode. In some implementations, the image sensor performs in foveated ROI full-resolution mode on all frames under all circumstances.

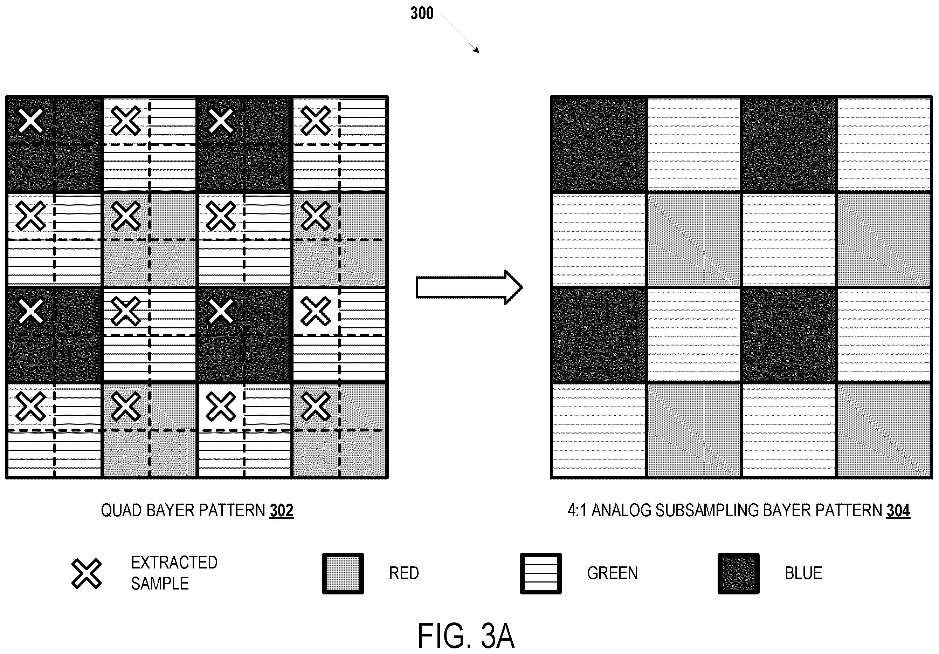

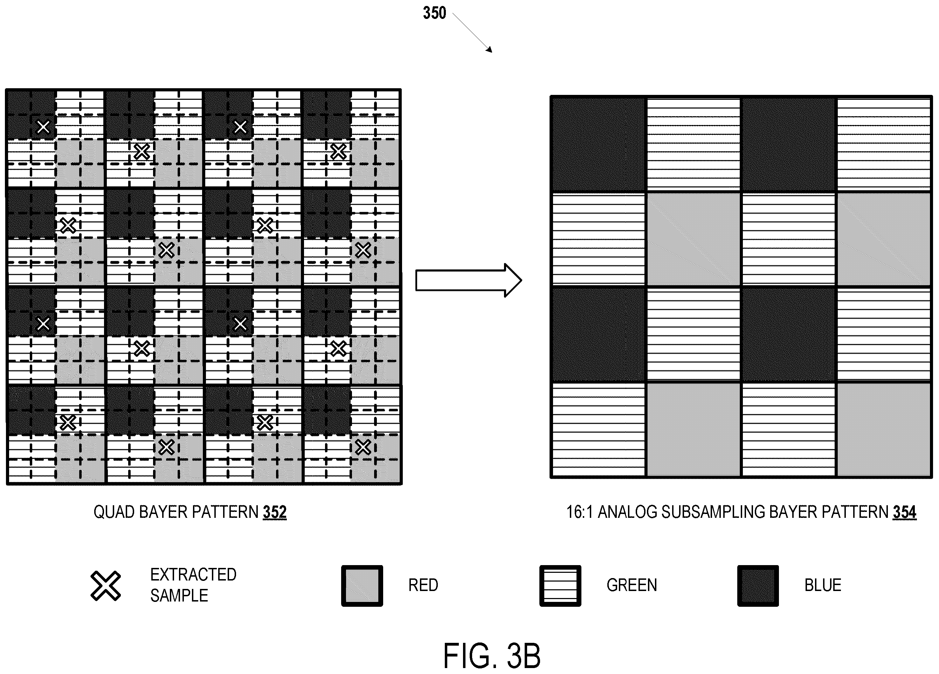

FIGS. 3A and 3B show example subsampling processes 300, 350. FIG. 3A shows application of a 4:1 analog subsampling process on a 2x2 RGGB Bayer (quad Bayer) pattern 302, resulting in a compression factor of four. In some implementations, the subsampling process is configured to uniformly sample pixels to form an RGGB Bayer pattern. Generally, remosaic processing is performed (on quad Bayer patterns for example) to form an RGGB Bayer pattern. By sampling the original image data with certain patterns, an RGGB Bayer pattern can be obtained in the compressed version of the data elements, without performing remosaic. As shown in FIG. 3A, marked pixels are selected to be sampled such that it results in an RGGB Bayer pattern 304. As such, remosaic does not need to be performed on the resulting pattern 304. FIG. 3B shows application of a 16:1 analog subsampling process on a quad Bayer pattern 352, resulting in a compression factor of sixteen. As shown, pixels are marked in a slightly different pattern compared to the 4:1 analog subsampling process. The sampling pattern includes slight offsets such that the resulting pattern is an RGGB Bayer pattern 354, and remosaic does not need to be performed.

FIGS. 3A and 3B illustrate two different analog subsampling processes 300, 350 on RGB color image data. Such processes can be implemented using image sensor hardware, configured by sensor register settings, and can be applied to various image domains (e.g., greyscale). Performing subsampling in the analog domain can reduce computational requirements for the analog-to-digital conversion and on-chip processing. Various other compression techniques can also be applied. For example, other subsampling ratios (e.g., 2:1) can be utilized. Digital subsampling or different sampling patterns along with performing remosaic can also be implemented.

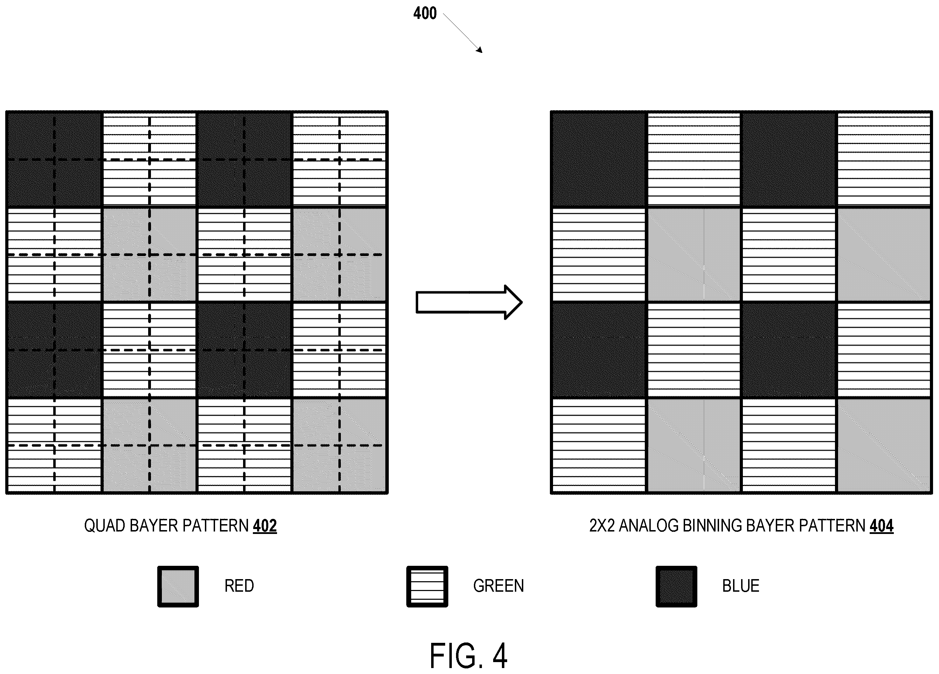

FIG. 4 shows an example binning process 400. As shown, a 2x2 analog binning process 400 is performed on a quad RGGB Bayer pattern 402. In such cases, remosaic does not need to be performed on the resulting RGGB Bayer pattern 404. The binning process can be performed using various statistical functions (e.g., mean, median, max, mode, etc.). Oftentimes, the binning process can result in images with higher SNR. Depending on the original image pattern layout, certain analog binning processes can be applied. For example, 2x2 binning can be performed on the 2x2 RGGB Bayer pattern 402. With digital binning, however, more flexible options can be performed (e.g., 4x4 binning).

FIGS. 3A, 3B, and 4 illustrate example compression techniques that can be applied for image data of various sizes. Multiple techniques can be applied to different regions of a single image. Different techniques can result in different resolutions. As such, applying different techniques can result in a compressed image with multiple regions of different resolutions. Such configurations can be represented with a foveation map.

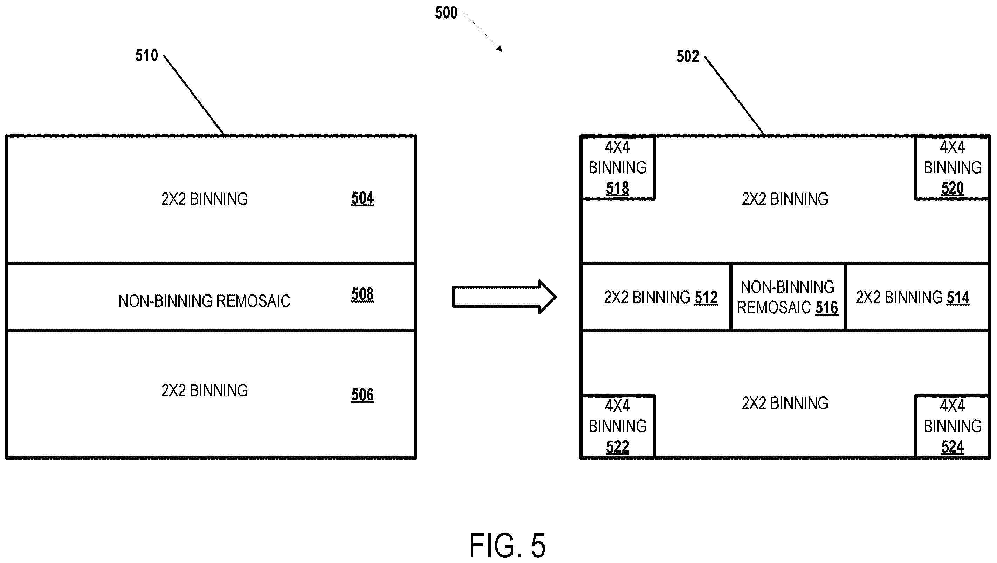

FIG. 5 shows an example mixed analog-digital sampling process 500 for generating a foveation map 502. Depending on the application and/or camera lens design, the subsampling/binning method and its ROI can be flexibly configured. The process 500 includes first performing analog processing. In the depicted example, 2x2 binning is performed on two ROIs 504, 506 on either side of a non-binning ROI 508. The ROI layout 510 includes the three ROIs 504-508 organized in rows. Afterwards, processing in the digital domain can be performed to generate the foveation map 502. Processing in the digital domain enables more flexible options, including different regions across a row. In the depicted example, the foveation map 502 includes two 2x2 binning ROIs 512, 514 and a center foveated non-binning ROI 516 formed from the non-binning ROI 508. The center foveated non-binning ROI 516 represents a full-resolution region. In the depicted example, the original image data includes a quad Bayer pattern. As such, remosaic is performed on the foveated non-binning ROI 516. Remosaic can be performed on the image sensor or on the backend ISP. The foveation map 502 further includes four 4x4 binning ROIs 518-524 -in the four corners if the image data. As human eyes have low resolution far away from the foveated region, utilizing a high compression technique in the corners can reduce data processing without sacrificing much quality.

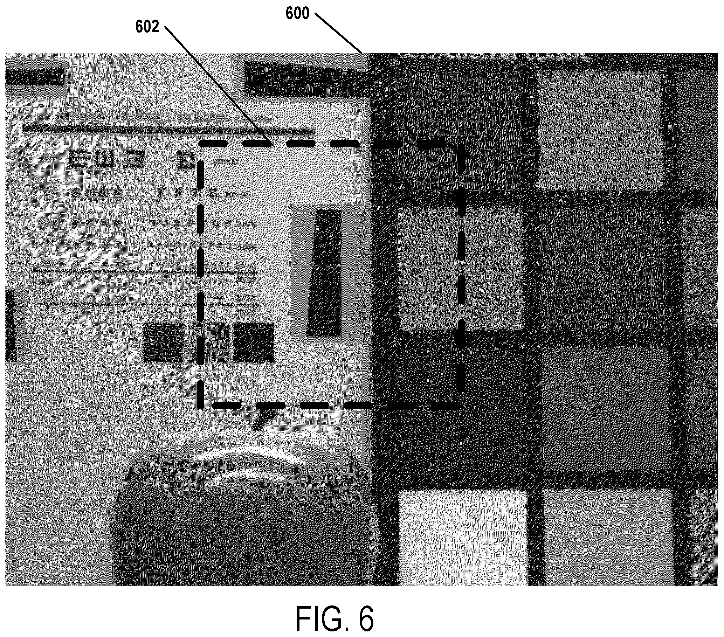

FIG. 6 shows an example image 600 with a foveation map applied. The image 600 includes a foveated ROI 602, which can represent a user's gaze, a voice command indicating an object in the ROI, etc. As shown, clarity difference is significant between inside the full-resolution foveated ROI 602 and the outside regions.

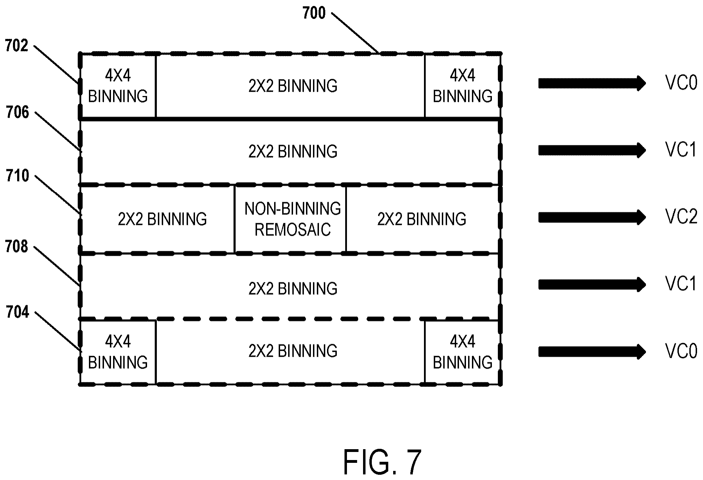

FIG. 7 shows how an example foveation map 700 is divided into three different virtual channels. As shown by the foveation map 700, binning (or downsampling in other cases) can be performed dynamically on different ROIs with different compression ratios. As such, the data volume for each pixel line can be different. To meet the MIPI and backend ISP receiver requirements, dummy data can be added to the line data, compensating for the missing data due to binning (or downsampling). To minimize the amount of added dummy data, thereby reducing communication bandwidth, the image can be divided into different virtual channels and transmitted accordingly.

In the depicted example, the foveation map 700 is divided into three virtual channels, VC0, VC1, and VC2. As shown, the topmost 702 and bottommost 704 sections are designated VC0 as the ROIs in these sections and the compression techniques applied are identical, resulting in similar data volume structure. Similarly, the two inner sections 706, 708 are designated VC1 as they have similar ROIs and applied compression techniques. The innermost section 710 with the foveated ROI is designated VC2.

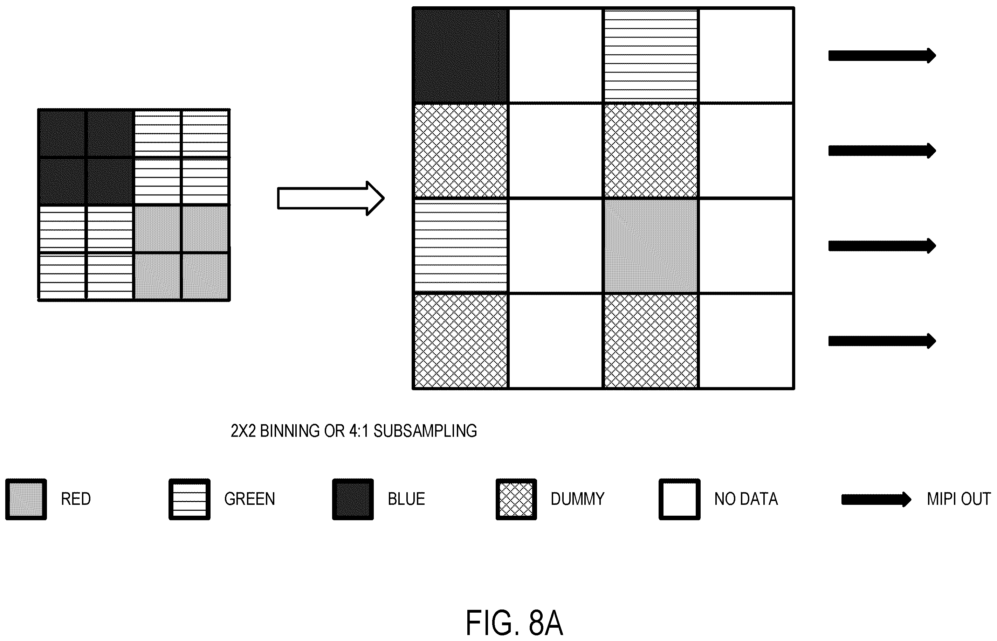

FIGS. 8A-8C shows example processes for adding dummy data for different virtual channels. FIG. 8A shows dummy data being added for a 2x2 binning process or a 4:1 subsampling process corresponding to VC2 of FIG. 7. As shown, the original data is a quad Bayer pattern with four rows of data. After a 4:1 compression, there are two rows of data elements. To compensate, two rows containing dummy data is added resulting in four rows of data elements to match the four rows of data elements in the non-binning remosaic ROI of VC2.

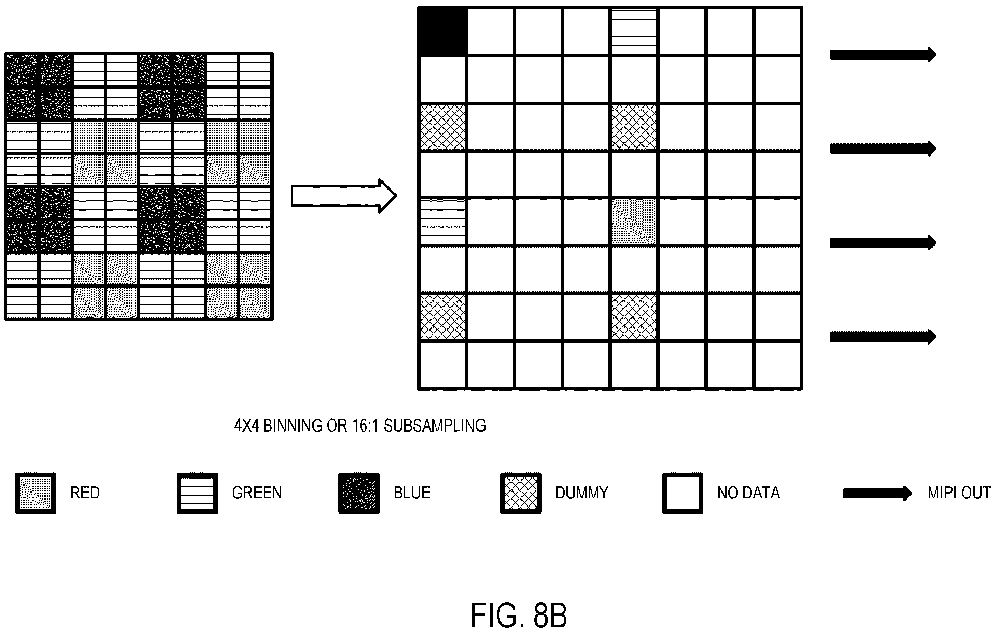

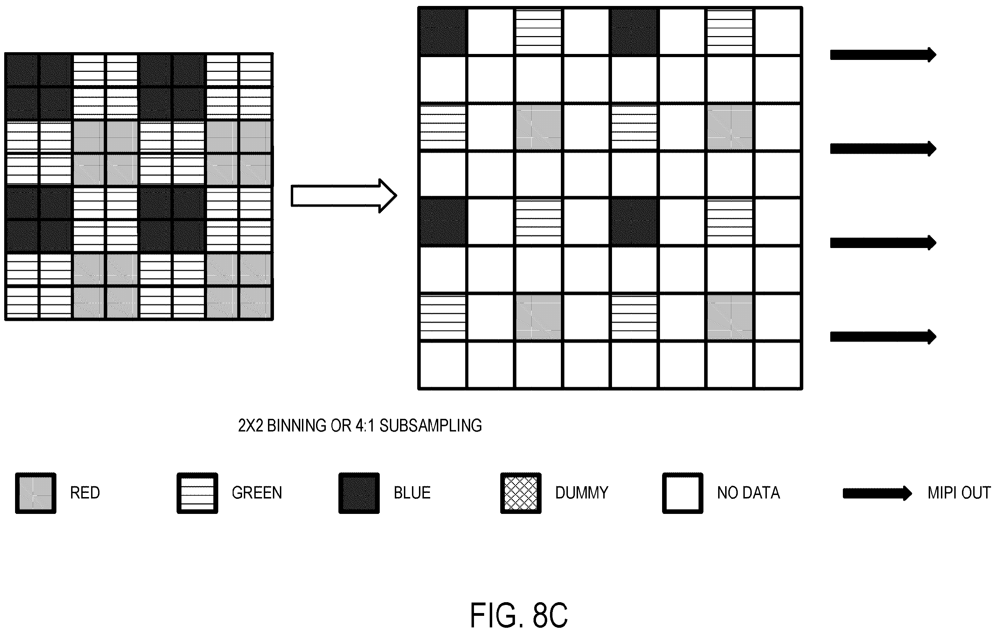

FIG. 8B shows dummy data being added for a 4x4 binning or 16:1 subsampling process corresponding to VC0 of FIG. 7. As shown, the original data is a quad Bayer pattern with eight rows of data. After a 16:1 compression, there are two rows of data elements. To compensate, two rows containing dummy data is added, resulting in four rows of data elements to match the number of rows in other ROIs of VC0. More specifically, the dummy data is added to the 4x4 binning process to match the four rows of data elements resulting from the 2x2 binning process of the ROIs in VC0. FIG. 8C illustrates the 2x2 binning process of the ROIs in VC0. As shown, the original data is a quad Bayer pattern with eight rows of data. After a 4:1 compression, there are four rows of data elements, matching the four rows of data elements shown in the process of FIG. 8B.

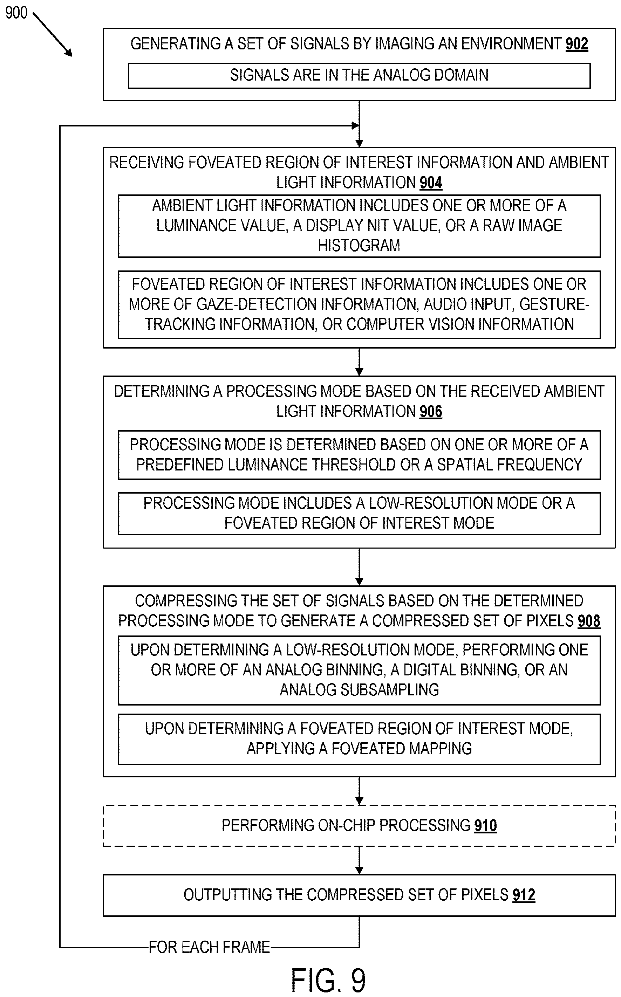

FIG. 9 shows a flow diagram for an example method 900 of adaptive foveated processing, which can be performed using the example image sensor of FIG. 1. At step 902, the example method 900 includes generating a set of signals. The set of signals can be generated in various ways. In some implementations, the set of signals are analog signals captured by an image sensor imaging, for example, an environment.

At step 904, the example method 900 includes receiving foveated region of interest information and ambient light information. The foveated region of interest information and ambient light information can include various types of data. Ambient light information, for example, can include data describing a brightness level, which can be used to determine whether the user of a near-eye device would benefit from a higher resolution in the foveated region of interest. The brightness level can describe the environment or the display of the near-eye device. For example, ambient light information can include one or more of a luminance value, a nit value, or a raw image histogram. The foveated region of interest information can include data describing a region of interest, which can be configured for higher-resolution. In some implementations, the foveated region of interest information includes one or more of gaze-detection information, audio input, gesture-tracking information, or computer vision information.

At step 906, the example method 900 includes determining a processing mode based on the received ambient light information. In some implementations, the processing mode is determined based on the received foveated region of interest information and the received ambient light information. The processing mode can be determined in various ways. In some implementations, the processing mode is determined based on one or more of a predefined luminance threshold or a spatial frequency, either of which can, for example, be derived from the received ambient light information. The determined processing mode can be one of a predetermined number of modes that describe how to process the set of signals. For example, processing modes can include a low-resolution mode, a foveated region of interest mode, and various other modes.

At step 908, the example method 900 includes compressing the set of signals based on the determined processing mode to generate a compressed set of pixels. In some implementations, upon determining that the processing mode is a low-resolution mode, a sampling algorithm can be performed to generate a compressed set of pixels from the set of signals. Examples of such algorithms include analog binning, digital binning, and analog subsampling. Upon determining that the processing mode is a foveated region of interest mode, a foveation map can be applied. A foveation map can describe ROIs of a given image frame with different resolutions and/or sampling techniques applied. For example, the foveation map can include a region of interest that is configured to provide full resolution. The foveation map can include other regions where binning and/or subsampling was performed. For example, regions corresponding to a typical user's periphery can be configured with lower resolutions, which can be achieved through binning and/or subsampling methods.

At step 910, the example method 900 optionally includes performing on-chip processing. Various processing techniques can be applied to image data on the image sensor. In some implementations, remosaic processing is performed. For example, certain imaging techniques can result in image data in a quad Bayer pattern. In such cases, a foveated ROI designated to have full resolution would need remosaic processing to convert the data into a Bayer pixel pattern.

At step 912, the example method 900 includes outputting the compressed set of pixels. The compressed set of pixels can be output in various components. In some implementations, the compressed set of pixels is sent to the graphical processors for rendering and display.

This disclosure addresses the unique challenges faced by near-eye devices in image capture and display. Unlike conventional electronic devices with uniform resolution requirements, near-eye devices can demand high resolution in the foveated region while allowing for reduced resolution in peripheral areas. By developing an adaptive foveated image sensor, the user experience of near-eye devices (and other nonconventional devices that can capture eye gazing information or user's intention through voice or gesture) can be enhanced while overcoming the limitations of current technologies. The solution offers the potential for longer device usage time, improved visual quality, and more versatile performance across various lighting conditions and viewing scenarios.

In some embodiments, the methods and processes described herein may be tied to a computing system of one or more computing devices. In particular, such methods and processes may be implemented as a computer-application program or service, an application-programming interface (API), a library, and/or other computer-program product.

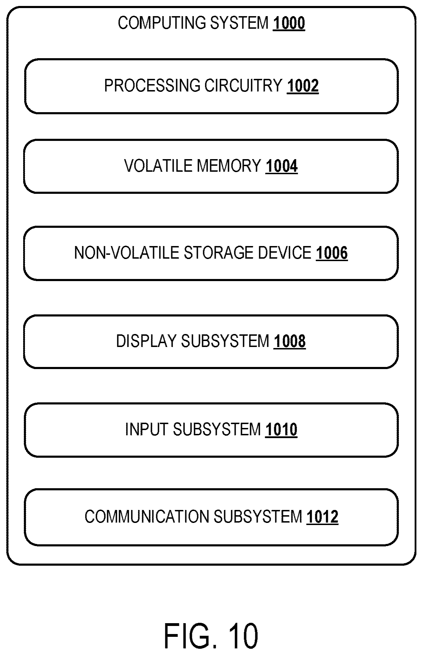

FIG. 10 schematically shows a non-limiting embodiment of a computing system 1000 that can enact one or more of the methods and processes described above. Computing system 1000 is shown in simplified form. Computing system 1000 may be implemented in the near-eye device 100 described above and illustrated in FIG. 1.

Computing system 1000 includes a logic processor 1002 volatile memory 1004, and a non-volatile storage device 1006. Computing system 1000 may optionally include a display subsystem 1008, input subsystem 1010, communication subsystem 1012, and/or other components not shown in FIG. 10.

Logic processor 1002 includes one or more physical devices configured to execute instructions. For example, the logic processor may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors configured to execute software instructions. Additionally or alternatively, the logic processor may include one or more hardware logic circuits or firmware devices configured to execute hardware-implemented logic or firmware instructions. Processors of the logic processor 1002 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. In such a case, these virtualized aspects are run on different physical logic processors of various different machines, it will be understood.

Non-volatile storage device 1006 includes one or more physical devices configured to hold instructions executable by the logic processors to implement the methods and processes described herein. When such methods and processes are implemented, the state of non-volatile storage device 1006 may be transformed-e.g., to hold different data.

Non-volatile storage device 1006 may include physical devices that are removable and/or built in. Non-volatile storage device 1006 may include optical memory, semiconductor memory, and/or magnetic memory, or other mass storage device technology. Non-volatile storage device 1006 may include nonvolatile, dynamic, static, read/write, read-only, sequential-access, location-addressable, file-addressable, and/or content-addressable devices. It will be appreciated that non-volatile storage device 1006 is configured to hold instructions even when power is cut to the non-volatile storage device 1006.

Volatile memory 1004 may include physical devices that include random access memory. Volatile memory 1004 is typically utilized by logic processor 1002 to temporarily store information during processing of software instructions. It will be appreciated that volatile memory 1004 typically does not continue to store instructions when power is cut to the volatile memory 1004.

Aspects of logic processor 1002, volatile memory 1004, and non-volatile storage device 1006 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 1000 typically implemented in software by a processor to perform a particular function using portions of volatile memory, which function involves transformative processing that specially configures the processor to perform the function. Thus, a module, program, or engine may be instantiated via logic processor 1002 executing instructions held by non-volatile storage device 1006, using portions of volatile memory 1004. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 1008 may be used to present a visual representation of data held by non-volatile storage device 1006. The visual representation may take the form of a graphical user interface (GUI). As the herein described methods and processes change the data held by the non-volatile storage device, and thus transform the state of the non-volatile storage device, the state of display subsystem 1008 may likewise be transformed to visually represent changes in the underlying data. Display subsystem 1008 may include one or more display devices utilizing virtually any type of technology. Such display devices may be combined with logic processor 1002, volatile memory 1004, and/or non-volatile storage device 1006 in a shared enclosure, or such display devices may be peripheral display devices.

When included, input subsystem 1010 may comprise or interface with one or more user-input devices such as a camera or microphone. Voice and gesture based inputs via the microphone and camera may be detected by the input subsystem 1010. Further, the input subsystem may be extended to include an external keyboard, mouse, touch screen, or touch pad.

When included, communication subsystem 1012 may be configured to communicatively couple various computing devices described herein with each other, and with other devices. Communication subsystem 1012 may include wired and/or wireless communication devices compatible with one or more different communication protocols. As non-limiting examples, the communication subsystem may be configured for communication via a wired or wireless local- or wide-area network, broadband cellular network, etc. In some embodiments, the communication subsystem may allow computing system 1000 to send and/or receive messages to and/or from other devices via a network such as the Internet.

FIG. 11 shows an example form factor of the near-eye device 100 of FIG. 1, in the form of AR/MR/VR glasses. As shown, display 110 is mounted within a frame of the glasses, while processing circuitry 104 and memory 106 are housed within a right and/or left temple of the glasses, and communicatively coupled to the display 110 by an electrical connection, shown in dashed lines. The display 110 can be transparent or opaque, as described above. Rear-facing cameras 116 and illuminators 114 are mounted within portions of the frame and/or display 110 as shown, and illuminate the eyes with non-visible light and capture images containing reflections (glints) of said non-visible light to track the eye position of each of the right and left eyes of the user. Forward facing ambient light sensor 118 and environment camera 108 are mounted in the bridge of the frame, as is environment camera 108.

The following paragraphs provide additional description of the subject matter of the present disclosure. One example provides an image sensor system for adaptive foveated processing, the image sensor system comprising: an image sensor for generating a set of signals by imaging an environment; and processing circuitry configured to: receive foveated region of interest (ROI) information and ambient light information; determine a processing mode based on the ambient light information; compress the set of signals from the image sensor based on the determined processing mode and the foveated ROI information to generate a compressed set of pixels; and output the compressed set of pixels. In this example, additionally or alternatively, the compressed set of pixels is output using a mobile industry processor interface (MIPI). In this example, additionally or alternatively, the processing mode is determined further based on one or more of a predefined luminance threshold or a predefined spatial frequency threshold. In this example, additionally or alternatively, the processing mode is determined further based on the predefined spatial frequency threshold for a foveated region of interest determined based on the foveated ROI information. In this example, additionally or alternatively, the set of signals comprises signals for a plurality of frames, wherein the processing mode is determined on a per-frame basis, and wherein compressing the set of signals is performed on a per-frame basis. In this example, additionally or alternatively, upon determining the processing mode to be a low-resolution mode, compressing the set of signals comprises: performing one or more of an analog binning, a digital binning, an analog subsampling, or a digital subsampling to generate the compressed set of pixels. In this example, additionally or alternatively, upon determining the processing mode to be a foveated ROI mode, compressing the set of signals comprises: applying a foveation map to the set of signals to generate the compressed set of pixels, wherein the foveation map comprises: a full-resolution region determined using the foveated ROI information; and a compressed region different from the full resolution region. In this example, additionally or alternatively, applying the foveation map comprises performing analog compression and performing digital compression after performance of the analog compression, wherein the analog compression comprises analog binning or analog subsampling, and wherein the digital compression comprises digital binning or digital subsampling. In this example, additionally or alternatively, the foveated ROI information comprises coordinates describing one or more ROIs. In this example, additionally or alternatively, the image sensor is implemented in a head-mounted display device.

Another example provides, enacted on an image sensor system, a method for adaptive foveated processing, the method comprising: generating a set of signals by imaging an environment; receiving foveated region of interest (ROI) information and ambient light information; compressing the set of signals based on the determined processing mode and the foveated ROI information to generate a compressed set of pixels; and outputting the compressed set of pixels. In this example, additionally or alternatively, the compressed set of pixels is output using a mobile industry processor interface (MIPI). In this example, additionally or alternatively, dummy data is added to the compressed set of pixels before output using the MIPI. In this example, additionally or alternatively, the sampling mode is determined further based on one or more of a predefined luminance threshold or a predefined spatial frequency threshold. In this example, additionally or alternatively, the set of signals comprises signals for a plurality of frames, wherein the processing mode is determined on a per-frame basis, and wherein compressing the set of signals is performed on a per-frame basis. In this example, additionally or alternatively, upon determining the processing mode to be a low-resolution mode, compressing the set of signals comprises: performing one or more of an analog binning, a digital binning, an analog subsampling, or a digital subsampling to generate the compressed set of pixels; and, upon determining the processing mode to be a foveated ROI mode, compressing the set of signals comprises: applying a foveation map to the set of signals to generate the compressed set of pixels.

Another example provides, enacted on an image sensor, a method for adaptive foveated processing, the method comprising: generating a set of signals by imaging an environment; receiving foveated region of interest (ROI) information; compressing the set of signals based on the foveated ROI information to generate a compressed set of pixels by applying a foveation map, wherein the foveation map comprises: a full-resolution region determined using the foveated ROI information; and a compressed region different from the full resolution region; and outputting the compressed set of pixels using a mobile industry processor interface (MIPI). In this example, additionally or alternatively, the set of signals comprises signals for a plurality of frames, and wherein compressing the set of signals is performed on a per-frame basis. In this example, additionally or alternatively, applying the foveation map comprises performing analog compression and performing digital compression after performance of the analog compression. In this example, additionally or alternatively, the compressed set of pixels is output to a processor capable of rendering the compressed set of pixels for display.

"And/or" as used herein is defined as the inclusive or ∨, as specified by the following truth table:

| A | B | AVB |
|---|---|---|
| True | True | True |
| True | False | True |
| False | True | True |
| False | False | False |

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. An image sensor system for adaptive foveated processing, the image sensor system comprising:
an image sensor (102) for generating (902) a set of signals by imaging an environment; and
processing circuitry (104) configured to:
receive (904) foveated region of interest (ROI) information (202) and ambient light information (204);
determine (906) a processing mode based on the ambient light information;
compress (908) the set of signals from the image sensor based on the determined processing mode and the foveated ROI information to generate a compressed set of pixels; and
output (912) the compressed set of pixels.

2. The image sensor system of claim 1, wherein the compressed set of pixels is output using a mobile industry processor interface (MIPI).

3. The image sensor system of claim 1, wherein the processing mode is determined further based on one or more of a predefined luminance threshold or a predefined spatial frequency threshold.

4. The image sensor system of claim 3, wherein the processing mode is determined further based on the predefined spatial frequency threshold for a foveated region of interest determined based on the foveated ROI information.

5. The image sensor system of claim 1, wherein the set of signals comprises signals for a plurality of frames, wherein the processing mode is determined on a per-frame basis, and wherein compressing the set of signals is performed on a per-frame basis.

6. The image sensor system of claim 1, wherein, upon determining the processing mode to be a low-resolution mode, compressing the set of signals comprises:
performing one or more of an analog binning, a digital binning, an analog subsampling, or a digital subsampling to generate the compressed set of pixels.

7. The image sensor system of claim 1, wherein, upon determining the processing mode to be a foveated ROI mode, compressing the set of signals comprises:
applying a foveation map to the set of signals to generate the compressed set of pixels, wherein the foveation map comprises:
a full-resolution region determined using the foveated ROI information; and
a compressed region different from the full resolution region.

8. The image sensor system of claim 7, wherein applying the foveation map comprises performing analog compression and performing digital compression after performance of the analog compression, wherein the analog compression comprises analog binning or analog subsampling, and wherein the digital compression comprises digital binning or digital subsampling.

9. The image sensor system of claim 1, wherein the foveated ROI information comprises coordinates describing one or more ROIs.

10. The image sensor system of claim 1, wherein the image sensor is implemented in a head-mounted display device.

11. A method (900) for adaptive foveated processing enacted on an image sensor system, the method comprising:
generating (902) a set of signals by imaging an environment;
receiving (904) foveated region of interest (ROI) information and ambient light information;
determining (906) a processing mode based on the ambient light information;
compressing (908) the set of signals based on the determined processing mode and the foveated ROI information to generate a compressed set of pixels; and
outputting (912) the compressed set of pixels.

12. The method of claim 11, wherein the compressed set of pixels is output using a mobile industry processor interface (MIPI),
preferably,
wherein dummy data is added to the compressed set of pixels before output using the MIPI.

13. The method of claim 11, wherein the sampling mode is determined further based on one or more of a predefined luminance threshold or a predefined spatial frequency threshold.

14. The method of claim 11, wherein the set of signals comprises signals for a plurality of frames, wherein the processing mode is determined on a per-frame basis, and wherein compressing the set of signals is performed on a per-frame basis.

15. The method of claim 11, wherein:
upon determining the processing mode to be a low-resolution mode, compressing the set of signals comprises:
performing one or more of an analog binning, a digital binning, an analog subsampling, or a digital subsampling to generate the compressed set of pixels; and
upon determining the processing mode to be a foveated ROI mode, compressing the set of signals comprises:
applying a foveation map to the set of signals to generate the compressed set of pixels.
